# EUROPÄISCHE PATENTSCHRIFT

(11) **EP 2 379 612 B1**
(45) Veröffentlichungstag und Bekanntmachung des Hinweises auf die Patenterteilung: **19.09.2018**
(21) Anmeldenummer: 09768066.4
(22) Anmeldetag: 10.12.2009
(51) Int. Cl.: C08G 12/06, C08G 73/06

(54) **VERFAHREN ZUR HERSTELLUNG VON POLYMEREN, IONISCHEN IMIDAZOLIUMVERBINDUNGEN**
METHOD FOR PRODUCING POLYMERIC, IONIC IMIDAZOLIUM COMPOUNDS
PROCÉDÉ DE FABRICATION DE COMPOSÉS IMIDAZOLIUM IONIQUES POLYMÈRES

(30) Priorität: 22.12.2008 EP 08172490
(43) Veröffentlichungstag der Anmeldung: 26.10.2011
(73) Patentinhaber: BASF SE, 67056 Ludwigshafen am Rhein (DE)
(72) Erfinder: SIEMER, Michael, 68159 Mannheim (DE); KOLTZENBURG, Sebastian, 67125 Dannstadt-Schauernheim (DE); KLEIN, Michael, 66879 Reichenbach-Steegen (DE)
(74) Vertreter: BASF IP Association
(86) Internationale Anmeldenummer: PCT/EP2009/066781
(87) Internationale Veröffentlichungsnummer: WO 2010/072571

(56) Entgegenhaltungen:
- WO-A1-91/14678
- WO-A1-94/08972
- WO-A1-2007/114792
- WO-A1-2008/110007
- JP-A- 5 165 258
- JP-A- 2004 333 566
- SUZUKI K ET AL: "A new alkyl-imidazole polymer prepared as an ionic polymer electrolyte by in situ polymerization of dye sensitized solar cells" JOURNAL OF PHOTOCHEMISTRY AND PHOTOBIOLOGY, A: CHEMISTRY, ELSEVIER SEQUOIA, LAUSANNE, CH, Bd. 164, 1. Januar 2004 (2004-01-01), Seiten 81-85, XP002533267 ISSN: 1010-6030
- TAKEICHI T ET AL: "Synthesis and thermal cure of high molecular weight polybenzoxazine precursors and the properties of the thermosets", POLYMER, ELSEVIER SCIENCE PUBLISHERS B.V, GB, vol. 46, no. 26, 12 December 2005 (2005-12-12), pages 12172-12180, XP027728353, ISSN: 0032-3861 [retrieved on 2005-12-12]

## Beschreibung

Die Erfindung betrifft ein Verfahren zur Herstellung von polymeren, ionischen Imidazoliumgruppen enthaltenden Verbindungen (kurz polymere, ionische Imidazoliumverbindungen), welches dadurch gekennzeichnet ist, dass
- eine α-Dicarbonylverbindung,
- ein Aldehyd der Formel II

   R3-CHO

   wobei R3 für ein H-Atom oder für einen organischen Rest mit 1 bis 20 C-Atomen steht,
- mindestens eine Aminoverbindung mit mindestens zwei primären Aminogruppen,
- gegebenenfalls eine Aminoverbindung mit nur einer primären Aminogruppe und eine
- Wasserstoffsäure,
wobei die Carbonylgruppen der α-Dicarbonylverbindung und des Aldehyds gegebenenfalls auch als Halbacetal, Acetal bzw. Halbketal oder Ketal vorliegen können,
miteinander umgesetzt werden.

Imidazoliumsalze sind als ionische Flüssigkeiten von Bedeutung. Es wurden daher verschieden Verfahren zur Synthese von Imidazoliumsalzen entwickelt.

In WO 91/14678 wird ein einstufiges Verfahren zur Herstellung von Imidazoliumsalzen aus einer α-Dicarbonylverbindung, einem Aldehyd, einem Amin und einer Säure beschrieben. Wasser wird durch azeotrope Destillation mit Toluol als Schleppmittel entfernt.

Eine Weiterentwicklung des vorstehenden Verfahrens ist aus WO 2009/074535 bekannt.

Polymere Imidazoliumverbindungen und Verfahren zu ihrer Herstellung sind bereits bekannt. So werden z.B. in WO 99/37276 polymere Imidazoliumverbindungen beschrieben, die durch Umsetzung von Diaminen, insbesondere Verbindungen mit zwei Imidazolgruppen, mit Dibromverbindungen erhältlich sind. Die erhaltenen kationischen Imidazoliumpolymere haben Bromidanionen als Gegenion. Halogenidanionen sind für viele Anwendung unerwünscht, da sie korrodierend wirken. Sie werden in kosmetischen Zusammensetzungen verwendet. Entsprechende Verbindungen und ihre Verwendung als Phasentransferkatalysatoren sind auch aus Journal of Fluorine Chemistry 128 (2007) Seiten 608 bis 611 bekannt. Aus WO 2008/110007 sind polymere Imidazoliumverbindungen bekannt, welche durch Umsetzung von Imidazolderivaten mit Dibromverbindungen und gegebenfalls auch Monobromverbindungen erhalten werden. JP 2004 333566 beschreibt polymere Imidazoliumverbindungen mit einem gewichtsmittleren Molekulargewicht von 2.000 bis 50.000. g/mol.

Ein anderes Verfahren ist in European Polymer Journal 44 (2008) 392-407 beschrieben. Diglycidylether und Imidazol werden zu polymeren Imidazoliumverbindungen mit Hydroxygruppen in der Polymerhauptkette umgesetzt. Diese werden mit Acrylsäure verestert, so dass das erhaltene Polymer radikalisch vernetztbar ist. Das erhaltene vernetzte Polymer eignet sich z.B. für die lonenchromatographie oder sonstige Trennverfahren.

Aus JP 2004217565 und Hiedo Toda, Kunio Kihara, Munehiro Hashimoto und Susumu Mizogami, Journal of Pharmaceutical Sciences, Vol.77, Nr. 6, Juni 1988 ist die Umsetzung von Imidazolderivaten mit Epichlorhydrin zu polymeren Imidazoliumverbindungen und ihre Verwendung als lonenaustauscherharz bekannt. Bei der Umsetzung mit Epichlorhydrin oder anderen Epoxyverbindungen werden zwingend Verbindungen erhalten, die eine Hydroxygruppe in ß-Position zum Stickstoffatom des Imidazolrings haben.

Aufgabe der vorliegenden Erfindung waren alternative polymere Imidazoliumverbindungen und ein alternatives Verfahren zur Herstellung von polymeren Imidazoliumverbindungen. Das Verfahren soll technisch möglichst einfach durchführbar sein und die Herstellung von polymeren Imidazoliumverbindungen in hohen Ausbeuten ermöglichen. Die polymeren Imidazoliumverbindungen sollen sich für möglichst viele Anwendungen eignen, die für derartige ionische Systeme in Betracht kommen. Insbesondere sollen sie sich als Dispergiermittel, z.B. für anorganische oder organische Pigmente oder sonstige feste oder flüssige Teilchen anwendbar sein.

Demgemäß wurde das eingangs definierte Verfahren gefunden. Gefunden wurden auch neue polymere, ionische Imidazoliumverbindungen und Verwendungen für diese Verbindungen.

### Zu den Ausgangsverbindungen des Herstellungsverfahrens

Erfindungsgemäß werden zwingend eine α-Dicarbonylverbindung, ein Aldehyd der Formel II, mindestens eine Aminoverbindung mit mindestens zwei primären Aminogruppen und eine Wasserstoffsäure miteinander umgesetzt. Die vorstehenden Verbindungen sind durch ihren Gehalt an funktionellen Gruppen definiert. Im Rahmen der vorliegenden Erfindungen können z.B. auch zwei der vorstehenden Verbindungen identisch sein, wenn z.B. eine Verbindung sowohl eine Säurefunktion als auch z.B. zwei primäre Aminogruppen oder eine Aldehydgruppe enthält. Bei der Umsetzung handelt es sich um eine Polykondensation. Bei einer Polykondensation erfolgt die Polymerisation unter Abspaltung einer niedermolekularen Verbindung wie Wasser oder Alkohol.

Im vorliegenden Fall wird Wasser abgespalten. Wenn die die Carbonylgruppen der α-Dicarbonylverbindung ganz oder teilweise als Ketal und/oder die Aldehydgruppe des Aldehyds als Acetal bzw. Halbacetal vorliegen, wird entsprechend ein Alkohol statt Wasser abgespalten.

### Zur α-Dicarbonylverbindung

Bei der α-Dicarbonylverbindung handelt es sich vorzugsweise um eine Verbindung der Formel I

R1-CO-CO-R2,

wobei R1 und R2 unabhängig voneinander für ein H-Atom oder für einen organischen Rest mit 1 bis 20 C-Atomen stehen. Die Reste können verzweigt oder unverzweigt sein oder auch funktionelle Gruppen enthalten, die z.B. zu einer weiteren Vernetzung der polymeren Imidazoliumverbindung beitragen können. Insbesondere handelt es sich bei R1 und R2 um Kohlenwasserstoffreste mit der angegebenen Anzahl von C-Atomen.

Besonders bevorzugt handelt es sich um Glyoxal.

Die Carbonylgruppen der α-Dicarbonylverbindung können auch als Ketal bzw. Halbketal, vorzugsweise als Halbketal oder Ketal eines niederen Alkohols, z.B. eines C1-C10 Alkanols vorliegen. In diesem Fall wird bei der späteren Kondensationsreaktion der Alkohol abgespalten.

Vorzugsweise liegen die Carbonylgruppen der α-Dicarbonylverbindung nicht als Halbketal oder Ketal vor.

### Zum Aldehyd der Formel II

Bei dem Aldehyd handelt es sich um einen Aldehyd der Formel II

R3-CHO,

wobei R3 für ein H-Atom oder für einen organischen Rest mit 1 bis 20 C-Atomen steht. Besonders bevorzugt ist Formaldehyd; der Formaldehyd kann auch in Form von Formaldehyd freisetzenden Verbindungen wie Paraformaldehyd oder Trioxan eingesetzt werden.

Die Aldehydgruppe des Aldehyds kann auch als Halbacetal oder Acetal, vorzugsweise als Halbacetal oder Acetal eines niederen Alkohols, z.B. eines C1-C10 Alkanols vorliegen. In diesem Fall wird bei der späteren Kondensationsreaktion der Alkohol abgespalten.

Vorzugsweise liegt die Aldehydgruppe nicht als Halbacetal oder Acetal vor.

### Zu der Aminoverbindung mit mindestens zwei primären Amingruppen

Bei der Aminoverbindung handelt es sich um eine Verbindung mit mindestens zwei primären Aminogruppen.

Die Aminoverbindung kann durch die allgemeine Formel III

(NH₂-)ₙ R4

wiedergegeben werden, wobei n eine ganze Zahl größer oder gleich 2 ist und die Anzahl der Aminogruppen angibt. n kann sehr große Werte annehmen, z.B. kann n eine ganze Zahl von 2 bis 10000, insbesondere 2 bis 5000 sein. Sehr hohe Werte für n liegen z.B. bei Einsatz von Polyaminen wie Polyvinylamin vor.

Bei Verwendung von Verbindungen mit n = 2 (Diamine) entstehen bei der erfindungsgemäßen Umsetzung lineare, polymere Imidazoliumverbindungen, bei Aminen mit mehr als zwei primären Aminogruppen entstehen verzweigte Polymere.

In einer bevorzugten Ausführungsform steht n für eine ganze Zahl von 2 bis 6, insbesondere von 2 bis 4. Ganz besonders bevorzugt ist n = 2 (Diamin) oder n = 3 (Triamin). Ganz besonders bevorzugt ist n = 2.

R4 steht für einen beliebigen n-wertigen organischen Rest. Der n-wertige organische Rest kann der Rest eines Polymeren sein, z.B. eines vorstehend genannten Polyvinylamin und hat dann ein entsprechend hohes Molekulargewicht.

Der organische Rest kann neben Kohlenstoff und Wasserstoff Heteroatome wie Sauerstoff, Stickstoff, Schwefel oder Halogene enthalten, z.B. in Form von funktionellen Gruppen wie Hydroxylgruppen, Ethergruppen, Estergruppen, Amidgruppen, aromatischen Heterocyclen, Ketogruppen, Aldehydgruppen, primären oder sekundären Aminogruppen, Iminogruppen, Thioethergrupen oder Halogenidgruppen.

Als weitere funktionelle Gruppen kommen auch ionische Gruppen, insbesondere auch anionische Gruppen oder in anionische Gruppen überführbare Gruppen wie, Carbonsäuregruppen bzw. Carboxylatgruppen, oder durch eine Veresterung angebundene Phosphorsäuregruppen oder Phosphonsäuregruppen in Betracht. Im Falle derartiger anionische Gruppen wirkt die Aminoverbindung bei der Umsetzung gleichzeitig als Wasserstoffsäure. Auf die Mitverwendung einer weiteren Waserstoffsäure kann dann verzichtet werden; die erhaltene polymere Imidazoliumverbindung ist in diesem Fall amphoter, d.h. sie enthält positive und negative Ladungen im gleichen Molekül. Als Beispiel für eine Aminoverbindung mit zwei primären Aminogruppen und einer Carboxylgruppe sei Lysin genannt.

Der organische Rest kann insbesondere ein Kohlenwasserstoffrest sein, der durch Heteroatome enthaltende funktionelle Gruppen substituiert oder unterbrochen sein kann.

In einer bevorzugten Ausführungsform enthält die Aminoverbindung allenfalls Ethergruppen, sekundäre oder tertiäre Aminogruppen und darüber hinaus keine weiteren funktionellen Gruppen. Genannt seine z.B. Polyetheramine.
R4 steht daher vorzugsweise für einen reinen Kohlenwasserstoffrest oder einen Kohlenwasserstoffrest, der durch Ethergruppen, sekundäre Aminogruppen oder tertiäre Aminogruppen unterbrochen oder substituiert ist. In einer besonderen Ausführungsform ist R4 ein reiner Kohlenwasserstoffrest und enthält keine funktionellen Gruppen. Der Kohlenwasserstoffrest kann aliphatisch oder aromatisch sein oder sowohl aromatische als auch aliphatische Gruppen enthalten.

In Betracht kommen Aminoverbindungen, vorzugsweise Diamine, in denen die primären Aminogruppen an einen aliphatischen Kohlenwasserstoffrest, vorzugsweise mit 2 bis 50 C-Atomen, besonders bevorzugt mit 3 bis 40 C-Atomen gebunden sind.

In Betracht kommen auch Aminoverbindungen, vorzugsweise Diamine, in denen die primären Aminogruppen direkt an ein aromatisches Ringsystem, z.B. eine Phenylen-oder Naphthylengruppe gebunden sind oder Aminoverbindungen, in denen die primären Aminogruppen an aliphatische Gruppen als Alkylsubstituenten eines aromatischen Ringsystems gebunden sind.

Als Diamine genannt seien insbesondere C2 bis C20 Alkylendiamine, wie 1,4 Butylendiamin oder 1,6 Hexylendiamin.

Als Triamine kommen z.B. aliphatische Verbindungen der Formel IV 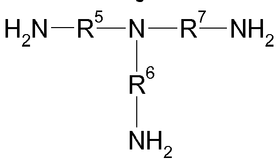 wobei R5, R6 und R7 unabhängig voneinander für eine C1 bis C10 Alkylengruppe, besonders bevorzugt eine C2 bis C6 Alkylengruppe stehen.

Im einfachsten Fall haben die Reste R5, R6 und R7 die gleiche Bedeutung; als Beispiel genannt sei Triaminoethylamin (R5=R6=R7= ethylen)

Genannt seien auch Verbindungen mit folgenden Strukturen:

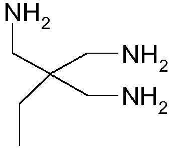

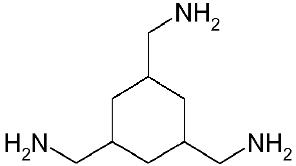

Bei dem erfindungsgemäßen Verfahren können insbesondere auch Gemische von Aminoverbindungen eingesetzt werden. Auf diese Weise werden polymere Imidazoliumverbindungen erhalten, die zwischen den Imidazolringen unterschiedliche Molekülgruppen enthalten. Durch Einsatz derartiger Gemische können gewünschte Eigenschaften wie Glasübergangstemperatur oder auch Elastizität und Härte gezielt eingestellt werden. Ebenso können auch die Löslichkeit in Lösemitteln wie Wasser oder organischen Lösemitteln, die Tendenz zur Ausbildung supramolekularer Strukturen sowie die Affinität zu anderen Molekülen oder Oberflächen gezielt in Hinblick auf Anforderungen der beabsichtigten Verwendung eingestellt werden.

Als Gemische von Aminverbindungen kommen z.B. Gemische von verschiedenen aliphatischen Aminoverbindungen oder Gemische von verschiedenen aromatischen Aminoverbindungen, aber auch Gemische von aliphatischen und aromatischen Aminoverbindungen in Betracht. Bei den Aminoverbindungen in den Gemischen kann es sich auch um Aminoverbindungen mit unterschiedlicher Anzahl von primären Amingruppen handeln. Ausgehend von Diaminen erhält man bei dem erfindungsgemäßen Verfahren lineare Polymere. Bei Einsatz von Aminoverbindungen mit drei oder mehr primären Amingruppen entstehen vernetzte und/oder verzweigte Strukturen. Durch Einsatz von Diaminen im Gemisch mit Aminoverbindungen mit mehr als zwei primären Aminogruppen, z.B. Triaminen, kann der gewünschte Vernetzungsgrad bzw. Verzweigungsgrad über den Anteil der Triamine eingestellt werden.

Als Aminoverbindungen können auch Aminoverbindungen mit einer Hydroxylgruppe in ß-Position zu einer der primären Aminogruppen eingesetzt werden. In diesem Fall können nach dem erfindungsgemäßen Verfahren auch polymere Imidazoliumverbindungen erhalten werden, wie sie bereits aus dem Stand der Technik durch Umsetzung von Imidazolderivaten mit Epichlorhydrin oder sonstigen Epoxyverbindungen (siehe oben) erhältlich waren. Der Einsatz derartiger Verbindungen ist aber im Rahmen dieser Erfindung nicht zwingend erforderlich, so dass darauf auch verzichtet werden kann.

In einer bevorzugten Ausführungsform hat die Aminoverbindung ein Molekulargewicht kleiner 10000 g/mol, besonders bevorzugt kleiner 5000 g/mol, ganz besonders bevorzugt kleiner 1000 g/mol, insbesondere kleiner 500 g/mol.

Als Diamine und Triamine insbesondere in Betracht kommen Verbindungen mit einem Molgewicht von 60 bis 500 bzw. von 60 bis 250 g/mol.

### Zu sonstigen Ausgangsstoffen

Bei dem erfindungsgemäßen Verfahren können weitere Verbindungen eingesetzt werden, z.B. um spezielle Endgruppen in das Polymer einzuführen oder durch weitere funktionelle Gruppen eine zusätzliche Vernetzung herbeizuführen, definierte Eigenschaften einzustellen oder später weitere Umsetzungen am entstandenen Polymer (polymeranaloge Umsetzungen) zu ermöglichen.

So können. falls gewünscht, z.B. Verbindungen mit nur einer primären Amingruppe zur Beeinflussung des Molekulargewichts der polymeren Imidazoliumverbindungen mitverwendet werden. Die Verbindung mit nur einer primären Amingruppe führt zu einem Kettenabbruch und bildet dann die Endgruppe der betreffenden Polymerkette. Je höher der Anteil von Verbindungen mit nur einer primären Aminogruppe, um so geringer ist das Molgewicht. Bezogen auf 100 mol Aminoverbindungen mit mindestens zwei primären Amingruppen, können in einer bevorzugten Ausführungsform z.B. 0 bis 10 mol Verbindungen mit nur einer primären Aminogruppe eingesetzt werden.

### Zur Wasserstoffsäure

Die zwingend mitverwendete Wasserstoffsäure kann durch die Formel Y^{m-} (H⁺)ₘ wiedergegeben werden, wobei m für eine positive ganze Zahl steht. Es kann sich auch um eine polymere Wasserstoffsäure, z.B. Polyacrylsäure handeln; in diesem Fall kann m sehr hohe Werte einnehmen. Als derartige polymere Wasserstoffsäuren genannt seien z.B. Polyacrylsäure, Polymethacrylsäure, oder ein Copolymer der (Meth)acrylsäure, Maleinsäure, Fumarsäure oder der Itaconsäure mit beliebigen anderen Monomeren, z.B. mit (Meth)acrylaten, Vinylestern, oder aromatischen Monomeren, wie Styrol, oder ein sonstiges Polymer mit einer Vielzahl von Carboxylgruppen.

In einer bevorzugten Ausführungsform steht m für eine ganze Zahle von 1 bis 4. besonders bevorzugt steht m für 1 oder 2. In einer besonderen Ausführungsform steht m für 1.

Das Anion Y^{m-} der Wasserstoffsäure bildet das Gegenion zu den Imidazoliumkationen der polymeren Imidazoliumverbindung.

Das Anion der Wasserstoffsäure ist z.B. ausgewählt aus:
der Gruppe der Halogenide und halogenhaltigen Anionen der Formeln:
   F-, Cl-, Br-, I-, BF4-, PF6-, AlCl4-, Al2Cl7-, Al3Cl10-, AlBr4-, FeCl4-, BCl4-, SbF6-, AsF6,-ZnCl3-, SnCl3-, CuCl2- ;
sonstigen Anionen bekannter Wasserstoffsäuren wie
   CN-, SCN-, OCN-, NO2-, NO3-, N(CN)- ;
der Gruppe der Sulfate, Sulfite und Sulfonate der allgemeinen Formeln:
   SO₄²⁻, HSO₄⁻, SO₃²⁻, HSO₃⁻, R^{a}OSO₃⁻, R^{a}SO₃⁻;;
der Gruppe der Carbonate und Kohlensäureester der allgemeinen Formeln:
   HCO₃⁻, CO₃²⁻, R^{a}CO₃⁻;
der Gruppe der Silikate und Kieselsäuresäureester der allgemeinen Formeln:
   SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻;
der Gruppe der Alkyl- bzw. Arylsilan-Salze der allgemeinen Formeln:
   R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻;
der Gruppe der Carbonsäureimide, Bis(sulfonyl)imide und Sulfonylimide der allgemeinen Formeln: 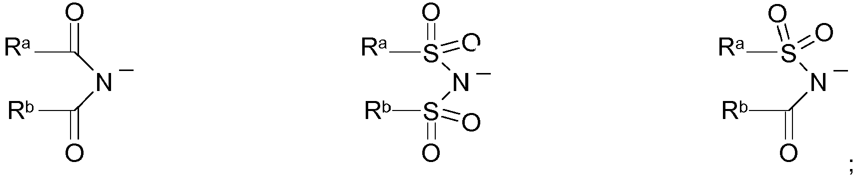
der Gruppe der Methide der allgemeinen Formel: 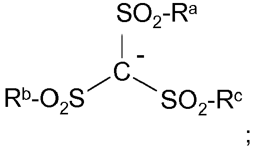
der Gruppe der Alkoxide und Aryloxide der allgemeinen Formeln:
   R^{a}O⁻;
der Gruppe der Halometallate der allgemeinen Formel
   [MᵣHalₜ]^{s-},
wobei M für ein Metall und Hal für Fluor, Chlor, Brom oder lod steht, r und t ganze positive Zahlen sind und die Stöchiometrie des Komplexes angeben und s eine ganze positive Zahl ist und die Ladung des Komplexes angibt;
der Gruppe der Sulfide, Hydrogensulfide, Polysulfide, Hydrogenpolysulfide und Thiolate der allgemeinen Formeln:
   S²⁻, HS-, [Sᵥ]²⁻, [HSᵥ]⁻, [R^{a}S]⁻,
wobei v eine ganze positive Zahl von 2 bis 10 ist;
der Gruppe der komplexen Metallionen wie Fe(CN)₆³⁻, Fe(CN)₆⁴⁻, MnO₄⁻, Fe(CO)4-

Das Anion der Wasserstoffsäure ist bevorzugt ausgewählt aus den Gruppen der
Phosphate der allgemeinen Formeln:
   PO₄³⁻, HPO₄²⁻, H₂PO₄⁻, R^{a}PO₄²⁻, HR^{a}PO₄⁻, R^{a}R^{b}PO₄⁻;
der Gruppe der Phosphonate und Phosphinate der allgemeinen Formel:
   R^{a}HPO₃⁻,R^{a}R^{b}PO₂⁻, R^{a}R^{b}PO₃⁻;
der Gruppe der Phosphite der allgemeinen Formeln:
   PO₃³⁻, HPO₃²⁻, H₂PO₃⁻, R^{a}PO₃²-, R^{a}HPO₃⁻, R^{a}R^{b}PO₃⁻;
der Gruppe der Phosphonite und Phosphinite der allgemeinen Formel:
   R^{a}R^{b}PO₂⁻, R^{a}HPO₂⁻, R^{a}R^{b}PO⁻, R^{a}HPO⁻;
der Gruppe der Carboxylate der allgemeinen Formeln:
   R^{a}COO⁻; R^{e}(-COO⁻)f
der Gruppe der Borate der allgemeinen Formeln:
   BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻, B(R^{a}SO4)⁻;
der Gruppe der Boronate der allgemeinen Formeln:
   R^{a}BO₂²⁻, R^{a}R^{b}BO⁻; und
der Gruppe der halogenierte Kohlenwasserstoffe
   CF3SO3-, (CF3SO3)2N-, CF3CO2-, CCl3CO2-;

In den vorstehenden Fomeln bedeuten R^{a}, R^{b}, R^{c} und R^{d} unabhängig voneinander jeweils nicht acider Wasserstoff, C₁-C₃₀-Alkyl und deren aryl-, heteroaryl-, cycloalkyl-, halogen-, hydroxy-, amino-, carboxy-, formyl-, -O-, -CO-, -CO-O- oder-CO-N< substituierte Komponenten, wie beispielsweise Methyl, Ethyl, 1-Propyl, 2-Propyl, 1-Butyl, 2 Butyl, 2-Methyl-1-propyl(Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonacosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder C_{q}F_{2(q-a)+(1-b)}H_{2a+b} mit q ≤ 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅);
C₃-C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder C_{q}F_{2(q-a)-(1-b)}H_{2a-b} mit q ≤ 30, 0 ≤ a ≤ q und b = 0 oder 1;
C₂-C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder C_{q}F_{2(q-a)-(1-b)}H_{2a-b} mit q ≤ 30, 0 ≤ a ≤ q und b = 0 oder 1;
C₃-C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder C_{q}F_{2(q-a)-3(1-b)}H_{2a-3b} mit q ≤ 30, 0 ≤ a ≤ q und b = 0 oder 1;
Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5; oder
zwei Reste einen ungesättigten, gesättigten oder aromatischen, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff-und/oder Schwefelatome und/oder ein oder mehrere substituierte oder unsubstituierte Iminogruppen unterbrochenen Ring.

Besonders bevorzugt bedeuten R^{a}, R^{b}, R^{c} und R^{d} unabhängig voneinander jeweils Wasserstoff und besonders bevorzugt jeweils eine C1 bis C10, vorzugsweise C1 bis C4 Alkylgruppe.

R^{e} (siehe obige Formel für die mehrwertige Carbonsäure) steht für einen organischen Rest, an den mehrere Carbonsäuregruppen gebunden sind. Entsprechend steht f für eine ganze Zahl von mindestens 2. Derartige mehrwertige Carbonsäuren können z.B. Maleinsäure oder Itaconsäure, Phthalsäure, Isophthalsäure oder Therephthalsäure sein; in Betracht kommen auch polymere Verbindungen, wie sie z.B. durch radikalische Polymerisation von ethylenisch ungesättigten Verbindungen unter Verwendung oder Mitverwendung von Monomeren mit einer oder zwei Carbonsäuregruppen, wie (Meth)-acrylsäure erhältlich sind.

Bei dem Anion einer Wasserstoffsäure handelt es sich vorzugsweise um das Anion einer Wasserstoffsäure mit einem pKS -Wert von mindestens 1, insbesondere von mindestens 2, in einer ganz einer besonderen Ausführungsform von mindestens 4 (gemessen bei 25°C, 1 bar in Wasser oder Dimethylsulfoxid).

Der pKs- Wert ist der negative dekadische Logarithmus der Säurekonstanten, KS. Der pKs- Wert wird dazu bei 25°C, 1 bar wahlweise in Wasser oder Dimethylsulfoxid als Lösemittel gemessen; erfindungsgemäß ist es daher ausreichend, wenn ein Anion entweder in Wasser oder in Dimethylsulfoxid den entsprechenden pKs- Wert hat. Dimethylsulfoxid wird insbesondere dann verwendet, wenn das Anion in Wasser nicht gut löslich ist. Zu beiden Lösemitteln finden sich Literaturangaben in Standardwerken.

Daher handelt es sich der Wasserstoffsäure vorzugsweise nicht um Wasserstoffsäuren der Halogene, welche einen pKs kleiner 1 haben, insbesondere handelt es sich nicht um HCl und nicht um HBr und bei dem Anion entsprechend nicht um Chlorid oder Bromid.

Besonders bevorzugt sind Carbonsäuren, d.h. Wasserstoffsäuren der obigen Carboxylate der allgemeinen Formeln:

R^{a}COO⁻ und R^{e}(-COO⁻)_{f}

Als derartige Carbonsäuren bzw. Carboxylate seien insbesondere organische Verbindungen mit 1 bis 20 C-Atomen genannt, die ein oder zwei, vorzugsweise eine Carboxylatgruppe enthalten.

Es kann sich dabei sowohl um aliphatische als auch um aromatische Verbindungen handeln, wobei unter den aromatischen Verbindungen solche verstanden werden, die aromatische Gruppen enthalten. Besonders bevorzugt sind aliphatische oder aromatische Verbindungen, die außer den Sauerstoffatomen der Carboxylatgruppe keine weiteren Heteroatome enthalten oder allenfalls noch ein oder zwei Hydroxylgruppen, Carbonylgruppen oder Ethergrupen enthalten. Ganz besonders bevorzugt sind aliphatische oder aromatische Verbindungen, die außer den Sauerstoffatomen der Carboxylatgruppe keine weiteren Heteroatome enthalten.

Als Verbindungen mit zwei Carboxylatgruppen seien z.B. die Anionen der der Phthalsäure, der Isophthalsäure, der C2 bis C6 Dicarbonsäuren, z.B. Oxalsäure Malonsäure, Bernsteinsäure, Glutarsäure, Adipinsäure genannt.

Als Verbindungen mit einer Carboxylatgruppe seien die Anionen von aromatischen, aliphatischen, gesättigten oder ungesättigten C1 bis C20 Carbonsäuren, insbesondere Alkancarbonsäuren, Alkencarbonsäuren, Alkincarbonsäuren, Alkadiencarbonsäuren, Alkatriencarbonsäuren, Hydroxycarbonsäuren oder Ketocarbonsäuren oder aromatische carbonsäuren wir Benzoesäure oder Phenylessigsäure aufgeführt. Geeignete Alkancarbonsäuren, Alkencarbonsäuren und Alkadiencarbonsäuren sind auch als Fettsäuren bekannt.

Als Anionen Y⁻ genannt seien insbesondere das Benzoat-Anion und die Anionen der C1 bis C20 Alkancarbonsäuren, welche gegebenenfalls durch eine oder zwei, vorzugsweise eine Hydroxygruppe substituiert sein können. Besonders bevorzugt sind das Benzoat-Anion und die Anionen der C2 bis C20 Alkancarbonsäuren; insbesondere das Acetat - Anion und Propionat-Anion; ganz besonders bevorzugt ist das Acetat-Anion und entsprechend Essigsäure als Wasserstoffsäure.

Weitere bevorzugte Wasserstoffsäuren bzw. bevorzugte Anionen von Wasserstoffsäuren sind neben den Carbonsäuren (Carboxylate) auch Sulfonsäure, Phosphorsäure oder Phosphonsäure, wobei die Säuregruppen der Sulfonsäure, Phosphorsäure oder Phosphonsäure teilweise verestert sein können.

Als Phosphorsäure und deren Ester seien insbesondere solche der Formel VII 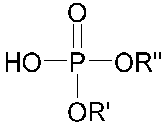 genannt, wobei R' und R" unabhängig voneinander für Wasserstoff oder eine C1 bis C10, vorzugsweise C1 bis C4 Alkylgruppe stehen.

Als Phosphonsäure und deren Ester seien insbesondere solche der Formel VIII 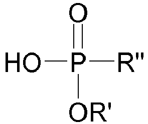 genannt, wobei R' und R" unabhängig voneinander für Wasserstoff oder eine C1 bis C10, vorzugsweise C1 bis C4 Alkylgruppe stehen.

### Zur Durchführung des Verfahrens

Die Umsetzung der Ausgangsverbindungen wird vorzugsweise in Wasser, einem mit Wasser mischbaren Lösemittel oder deren Gemische durchgeführt.

Als mit Wasser mischbare Lösemittel seien insbesondere protische Lösemittel, vorzugsweise aliphatische Alkohole oder Ether mit maximal 4 Kohlenstoffatomen, z.B. Methanol, Ethanol, Methylethylether, Tetrahydrofuran genannt. Geeignete protische Lösemittel sind mit Wasser in jedem Verhältnis mischbar (bei 1 bar, 21°C).

Vorzugsweise erfolgt die Umsetzung in Wasser oder Gemischen von Wasser mit den vorstehenden protischen Lösemitteln. Besonders bevorzugt erfolgt die Umsetzung in Wasser.

Die Umsetzung der Ausgangskomponenten kann z.B. bei Drücken zwischen 0,1 und 10 bar, insbesondere Normaldruck und z.B. bei Temperaturen von 5 bis 100°C, insbesondere 5 bis 50°C, besonders bevorzugt 10 bis 40°C erfolgen.

Die Ausgangskomponenten können in beliebiger Reihenfolge zusammengegeben werden.

Die Umsetzung kann diskontinuierlich, semi-kontinuierlich oder kontinuierlich erfolgen. Bei der semi-kontinuierlichen Fahrweise kann z.B. mindestens eine Ausgangsverbindung vorgelegt werden und die übrigen Ausgangskomponenten können zudosiert werden.

Bei der kontinuierlichen Fahrweise werden die Ausgangskomponenten kontinuierlich zusammengeführt und das Produktgemisch kontinuierlich abgeführt. Die Ausgangskomponenten können einzeln oder als Gemisch aller oder eines Teils der Ausgangskomponenten zugeführt werden. In einer besonderen Ausführungsform werden das Amin und die Säure vorab gemischt und als ein Stoffstrom zugeführt, die übrigen Komponenten können einzeln oder ebenfalls als Mischung (2. Stoffstrom) zugeführt werden.

In einer weiteren besonderen Ausführungsform werden alle Ausgangskomponenten, die Carbonylgruppen enthalten (d.h. die α-Dicarbonylverbindung, das Aldehyd und die Wasserstoffsäure des Anions X, falls es sich um ein Carboxylat handelt) vorab gemischt und gemeinsam als Stoffstrom zugeführt; die verbleibende Aminoverbindung wird dann separat zugeführt.

Die kontinuierliche Herstellung kann in beliebigen Reaktionsgefäßen, z.B. einem Rührkessel durchgeführt werde. Bevorzugt wird sie in einer Rührkesselkaskade, z.B. aus 2 bis 4 Rührkesseln, oder in einem Rohrreaktor durchgeführt.

Die Umsetzung verläuft prinzipiell nach folgender Reaktionsgleichung.

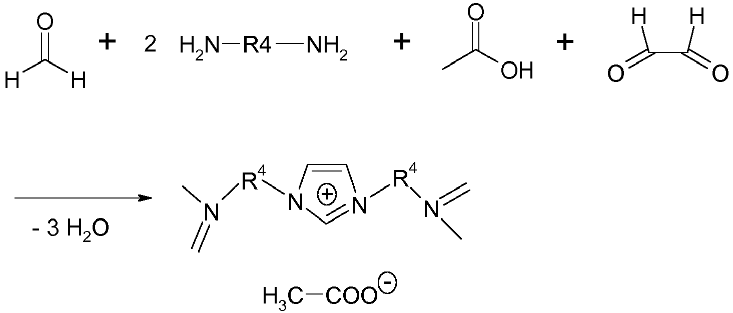

Dabei werden auf 1 Mol der α-Dicarbonylverbindung 1 mol des Aldehyds der Formel II, 2 mol primäre Aminogruppen und 1 Mol Säuregruppe (H⁺) der Wasserstoffsäure benötigt. In dem erhaltenen Polymer sind die Imidazoliumgruppen durch das Diamin miteinander verbunden.

Hohe Molekulargewichte können erreicht werden, wenn die Verbindungen in den vorstehenden, equimolaren Mengen eingesetzt werden.

Nach Durchführung der Polykondensationsreaktion können die erhaltenen polymeren Verbindungen aus der Lösung ausfallen oder in Lösung bleiben. Vorzugsweise werden Lösungen der polymeren ionischen Imidazoliumverbindungen erhalten.

Aus diesen Lösungen können die polymeren Verbindungen nach üblichen Verfahren abgetrennt werden. Im einfachsten Fall kann das Lösemittel, z.B. Wasser durch Destillation oder durch Sprühtrocknung entfernt werden.

Durch das erfindungsgemäße Verfahren sind polymere, ionische Imidazoliumverbindungen erhältlich.

In einer besonderen Ausführungsform sind polymere, ionische Imidazoliumverbindungen durch ein Verfahren erhältlich, bei dem es sich bei weniger als 50 mol % der verwendeten Aminoverbindungen um solche mit einer Hydroxylgruppe in ß-Position zur primären Aminogruppe handelt oder auf die Mitverwendung derartiger Aminoverbindungen mit einer Hydroxylgruppe in ß-Position zur primären Aminogruppe ganz verzichtet wurde.

Die nach dem Verfahren erhältlichen polymeren, ionischen Imidazoliumverbindungen können ein beliebiges anionisches Gegenion haben; beim dem anionischen Gegenion muss es sich nicht zwingend um ein Halogenid, z.B. ein Bromid handeln; ein Halogenidanion oder Bromidanion kann daher, wenn gewünscht, ausgeschlossen werden.

Neue Polymere, ionische Imidazoliumverbindungen sind daher durch ein Verfahren erhältlich, , bei dem es sich bei weniger als 50 mol % der verwendeten Aminoverbindungen um solche mit einer Hydroxylgruppe in ß-Position zur primären Aminogruppe handelt und als Wasserstoffsäure keine Säure mit einem Bromidanion verwendet wird.

Das zahlenmittlere Molgewicht Mn der polymeren, ionischen Imidazoliumverbindungen kann in einer bevorzugten Ausführungsform größer 500, insbesondere größer 1000, bzw. auch größer 2000 und größer 5000 g/mol sein.

Mn kann z.B. auch Werte zwischen 500 und 500 000, insbesondere auch zwischen 500 und 50 000 g/mol annehmen.

Die Polydispersität (Quotient aus gewichtsmittlerem und zahlenmittlerem Molekulargewicht Mw/Mn) kann z.B. Werte von 1,1 bis 100, insbesondere auch werte von 1,5 bis 20 haben.

Die Molgewichte können durch Gelpermeationschromatographie bestimmt werden; auf die so bestimmten Molgewichte beziehen sich die vorstehenden Angaben.

Bevorzugte polymere, ionische Imidazoliumverbindungen, haben kationische Imidazoliumpolymere mit Struktureinheiten der Formel IV 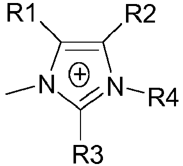 worin R1, R2, R3 und R4 die obige Bedeutung haben, mit der Ausnahme, dass R4 hier für einen (n-1) wertigen organischen Rest steht, der keine Hydroxylgruppe in ß-Position zum Stickstoffatom des Imidazolrings enthält und es sich bei den zugehörige Anionen nicht um Bromid handelt.

Lineare, polymere, ionische Imidazoliumverbindungen, welche durch Verwendung von Diaminen als Aminoverbindung erhältlich sind, haben vorzugsweise kationische Imidazoliumpolymere mit Struktureinheiten der Formel V 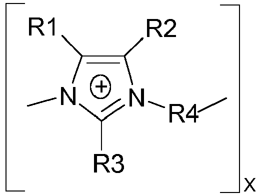 worin x für ein ganze Zahl steht, R1, R2 und R3 und R4 die obige Bedeutung haben, mit der Ausnahme, dass R4 hier für einen organischen Rest steht, der keine Hydroxylgruppe in ß-Position zum Stickstoffatom des Imidazolrings enthält und es sich bei den zugehörige Anionen um Anionen handelt, deren Wasserstoffsäure einen pKs-Wert größer 1 hat. Anzumerken ist hier, dass bei dem herstellungsverfahren naturgemäß Polymere mit unterschiedlichen Kettenlängen erhalten werden, so dass der Mittelwert für x im erhaltenen Gemisch beliebige Werte haben kann und üblcherweise keine ganze Zahl ist.

Die polymeren, ionische Imidazoliumverbindungen bestehen aus dem kationischen Imidazoliumpolymer und dem Gegenanion. Das kationische Imidazoliumpolymer besteht in einer bevorzugten Ausführungsform zu mehr als 60 Gew.-%, insbesondere zu mehr als 80 Gew.-% und besonders bevorzugt zu mehr als 90 bzw zu mehr als 95 Gew.-% aus Struktureinheiten der vorstehenden Formel IV oder V.

Für einige ionische Imidazoliumverbindungen sind nachstehend schematisch die Strukturformeln der kationischen Imidazoliumpolymeren angegeben:
a) Polymer aus Formaldehyd, Glyoxal und Butandiamin 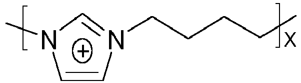
b) Polymer aus Formaldehyd, Glyoxal und Tri-aminoethylen-amin 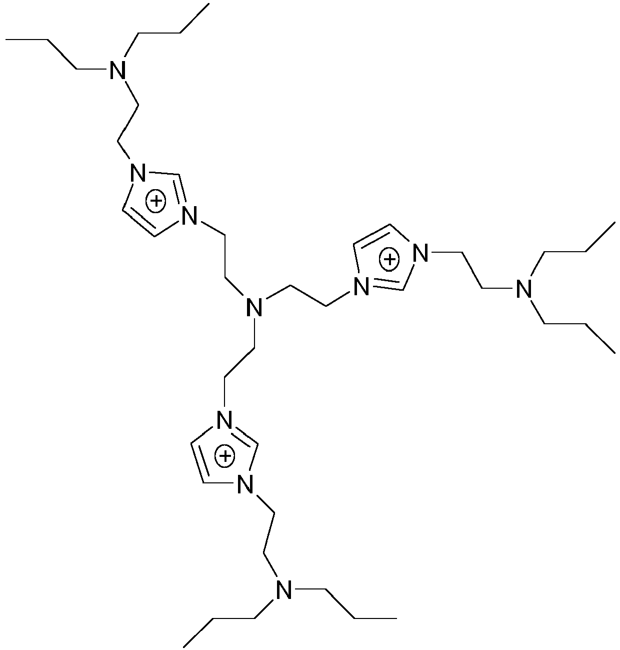
c) Polymer aus Formaldehyd, Glyoxal und Polyvinylamin

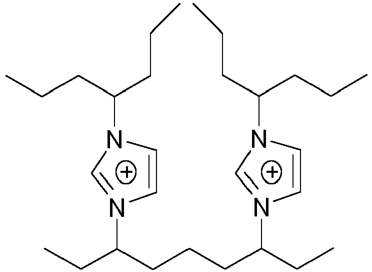

Die polymeren, ionischen Imidazoliumverbindungen eignen sich für beliebige Verwendungen, bei denen ionische Polymere zum Einsatz kommen. Insbesondere eignen sie sich z.B. als Dispergiermittel für anorganische oder organische Teilchen, insbesondere zur Dispergierung dieser Teilchen in wässrigen Systemen.

### Beispiele 1 bis 9

Die Durchführung der Beispiele 1 und 2 ist in der Tabelle beschrieben. Die Herstellung der Polymeren in Beispielen 3 bis 9 erfolgte gemäß der Herstellungsvorschrift in Beispiel 2.

**Tabelle 1 mit Beispielen 1 bis 9**

| Abkürzungen: | | | | | |
|---|---|---|---|---|---|
| RT: Raumtemperatur, ca. 21°C; P: Produkt | | | | | |
| Beispiel 1 | 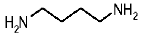 | 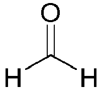 | 1Mol Formalin , 1Mol Glyoxal und 1Mol Eisessig werden vorgelegt. 1Mol 1,4 Butandiamin (mit Fön aufgeschmolzen, Fp. 25-28°C) bei RT zugetropft (exotherm, Eisbadkühlung). Ansatz rührt bei RT über Nacht. Den schwarz-braunen Ansatz am Rotationsverdampfer bei maximal 70°C/1mbar eingeengt (schäumt, mit EtOH/Toluol codestilliert), Produkt P1 dunkel braunes Gummi). | P1 | Laut H-und C-NMR: (P1 in H2O 8h bei 80°C gelöst, ca. 2%ige Lösung) |
| | 1Mol | | | 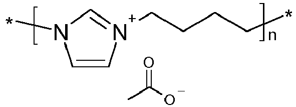 | |
| | | 1Mol (36.5%ig in Wasser) | | | |
| | | 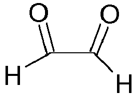 | | | |
| | | 1Mol (40%ig in H2O) | | | |
| | | 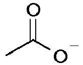 | | | |
| | | 1Mol | | | |
| Beispiel 2 | 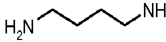 | 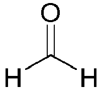 | 1Mol Formalin , 1Mol Glyoxal und 1Mol Eisessig werden vorgelegt. 1 Mol1,4 Butandiamin (mit Fön aufgeschmolzen, Fp. 25-28°C) bei RT zugetropft (exotherm, Eisbadkühlung). Ansatz rührt bei RT über Nacht. | P2 | |
| | 1Mol | | | 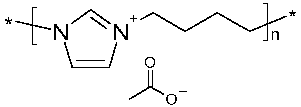 | |
| | | 1Mol (36.5%ig) | | | |
| | | 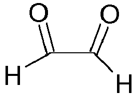 | | | |
| | | 1Mol (40%ig in H2O) | | | |
| | | 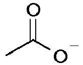 | Den schwarz-braunen Ansatz (gummiartig) mit H2O in einen Einhalskolben überführt. | | |
| | | 1Mol | | | |
| Beispiel 3 | 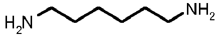 | 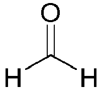 | P3 schwarz braunes zähes gummiartiges Öl | 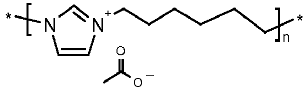 | |
| | 1mol | | | | |
| | | 1Mol (36.5%ig) | | | |
| | | 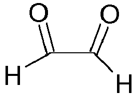 | | | |
| | | 1Mol (40%ig in H2O) | | | |
| | | 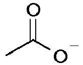 | | | |
| | | 1Mol | | | |
| Beispiel 4 | 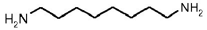 | 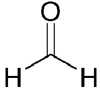 | P4 schwarz braunes zähes gummiartiges Öl | 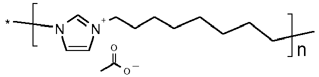 | |
| | 1mol | | | | |
| | | 1Mol (36.5%ig) | | | |
| | | 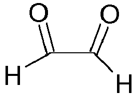 | | | |
| | | 1Mol (40%ig in H2O) | | | |
| | | 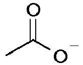 | | | |
| | | 1mol | | | |
| Beispiel 5 | 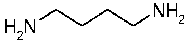 | 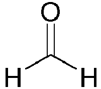 | P5 dunkel braun, teilweise fest, teilweise zähes Öl | 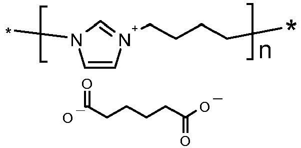 | |
| | 1Mol | | | | |
| | | 1Mol (36.5%ig) | | | |
| | | 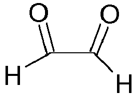 | | | |
| | | 1Mol (40%ig in H2O) | | | |
| | | 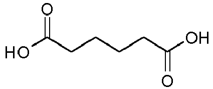 0, 5 | | | |
| | | Mol | | | |
| Beispiel 6 | 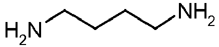 | 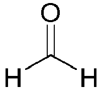 | P6 dunkel braun, teilweise fest, teilweise zähes Öl | 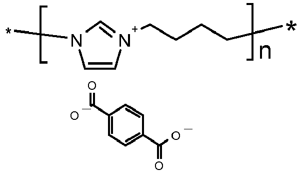 | |
| | 1Mol | | | | |
| | | 1Mol (36.5%ig) | | | |
| | | 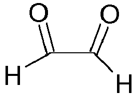 | | | |
| | | 1Mol (40%ig in H2O) | | | |
| | | 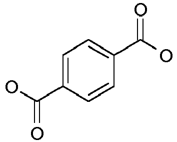 | | | |
| | | 1Mol | | | |
| Beispiel 7 | 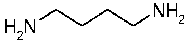 | 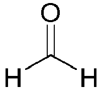 | P7 dunkel braunes zähes Öl | 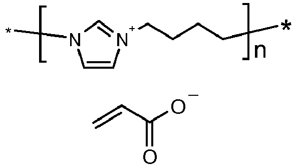 | |
| | 1Mol | | | | |
| | | 1Mol (36.5%ig) | | | |
| | | 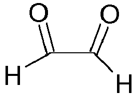 | | | |
| | | 1Mol (40%ig in H2O) | | | |
| | | 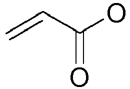 | | | |
| | | 1Mol | | | |
| Beispiel 8 | 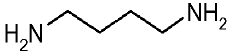 | 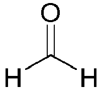 | P8 dunkel braunes "Gummi" | 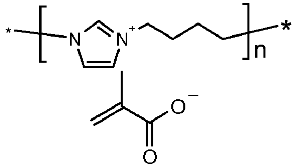 | |
| | 1Mol | | | | |
| | | 1Mol (36.5%ig) | | | |
| | | 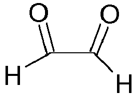 | | | |
| | | 1Mol (40%ig in H2O) | | | |
| | | 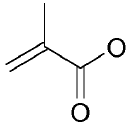 | | | |
| | | 1Mol | | | |
| Beispiel 9 | 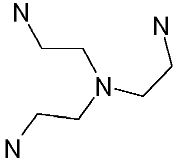 | 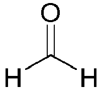 | P9 dunkel braunes zähes Öl | 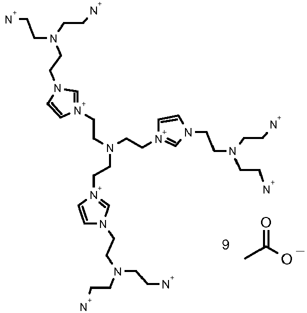 | |
| | | 3 Mol (36.5%ig) | | | |
| | 4Mol | 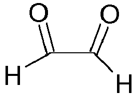 | | | |
| | | | | | |
| | | 3 Mol (40%ig in H2O) | | | |
| | | 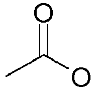 | | | |
| | | 9 Mol | | | |

## Patentansprüche

1. Verfahren zur Herstellung von polymeren, ionische Imidazoliumgruppen enthaltenden Verbindungen (kurz polymere, ionische Imidazoliumverbindungen), **dadurch gekennzeichnet, dass**
- eine α-Dicarbonylverbindung,
- ein Aldehyd der Formel II
R3-CHO
wobei R3 für ein H-Atom oder für einen organischen Rest mit 1 bis 20 C-Atomen steht,
- mindestens eine Aminoverbindung mit mindestens zwei primären Aminogruppen,
- gegebenenfalls eine Aminoverbindung mit nur einer primären Aminogruppe und eine
- Wasserstoffsäure,
wobei die Carbonylgruppen der α-Dicarbonylverbindung und des Aldehyds gegebenenfalls auch als Halbacetal, Acetal bzw. Halbketal oder Ketal vorliegen können,
miteinander umgesetzt werden.

2. Verfahren gemäß Anspruch 1, **dadurch gekennzeichnet, dass** es sich bei der α-Dicarbonylverbindung um eine um eine Verbindung der Formel I
R1-CO-CO-R2,
handelt, wobei R1 und R2 unabhängig voneinander für ein H-Atom oder für einen organischen Rest mit 1 bis 20 C-Atomen stehen.

3. Verfahren gemäß Anspruch 1 oder 2, **dadurch gekennzeichnet, dass** es sich bei der α-Dicarbonylverbindung um Glyoxal handelt.

4. Verfahren gemäß Anspruch 1, **dadurch gekennzeichnet, dass** es sich bei dem Aldehyd um Formaldehyd handelt.

5. Verfahren gemäß einem der Ansprüche 1 bis 4, **dadurch gekennzeichnet, dass** es sich bei der Aminoverbindung um eine Verbindung der Formel III
(NH2-)ₙ R4
handelt, wobei n eine ganze Zahl größer oder gleich 2 ist und R4 für einen beliebigen n-wertigen organischen Rest steht.

6. Verfahren gemäß einem der Ansprüche 1 bis 5, **dadurch gekennzeichnet, dass** es sich bei der Aminoverbindung um ein aliphatisches oder aromatisches Diamin oder Triamin handelt.

7. Verfahren gemäß einem der Ansprüche 1 bis 6, **dadurch gekennzeichnet, dass** es sich bei der Aminoverbindung um ein C2 bis C20 Alkylendiamin handelt.

8. Verfahren gemäß einem der Ansprüche 1 bis 7, **dadurch gekennzeichnet, dass** als Aminoverbindung ein Gemisch unterschiedlicher Aminoverbindungen eingesetzt wird.

9. Verfahren gemäß einem der Ansprüche 1 bis 8, **dadurch gekennzeichnet, dass** es sich bei der Wasserstoffsäure um eine Säure der Formel Y^{m-} (H⁺)ₘ handelt, wobei m für eine ganze Zahl steht.

10. Verfahren gemäß Anspruch 9, **dadurch gekennzeichnet, dass** m für eine ganze Zahl von 1 bis 4 steht.

11. Verfahren gemäß einem der Ansprüche 1 bis 10, **dadurch gekennzeichnet, dass** es sich bei der Wasserstoffsäure um eine Säure mit einem pKs Wert größer 1 handelt.

12. Verfahren gemäß einem der Ansprüche 1 bis 11, **dadurch gekennzeichnet, dass** es sich bei der Wasserstoffsäure um eine Carbonsäure, Sulfonsäure, Phosphorsäure oder Phosphonsäure, wobei die Säuregruppen der Sulfonsäure, Phosphorsäure oder Phosphonsäure teilweise verestert sein können, handelt.

13. Verfahren gemäß einem der Ansprüche 1 bis 12, **dadurch gekennzeichnet, dass** es sich bei der Wasserstoffsäure um Essigsäure handelt.

14. Verfahren gemäß einem der Ansprüche 1 bis 13, **dadurch gekennzeichnet, dass** das Verfahren in Wasser, in einem mit Wasser mischbaren Lösemittel oder deren Gemische durchgeführt wird.

## Claims

1. A process for preparing polymeric, ionic compounds comprising imidazolium groups (polymeric, ionic imidazolium compounds for short), wherein
- an α-dicarbonyl compound,
- an aldehyde of the formula II
R3-CHO
where R3 is an H atom or an organic radical having from 1 to 20 carbon atoms,
- at least one amino compound having at least two primary amino groups,
- optionally an amino compound having only one primary amino group and a
- protic acid,
where the carbonyl groups of the α-dicarbonyl compound and of the aldehyde may, optionally also be present as hemiacetal, acetal or hemiketal or ketal,
are reacted with one another.

2. The process according to claim 1, wherein the α-dicarbonyl compound is a compound of the formula I
R1-CO-CO-R2
where R1 and R2 are each, independently of one another, an H atom or an organic radical having from 1 to 20 carbon atoms.

3. The process according to claim 1 or 2, wherein the α-dicarbonyl compound is glyoxal.

4. The process according to claim 1, wherein the aldehyde is formaldehyde.

5. The process according to any of claims 1 to 4, wherein the amino compound is a compound of the formula III
(NH2-)ₙ R4
where n is an integer greater than or equal to 2 and R4 is any n-valent organic radical.

6. The process according to any of claims 1 to 5, wherein the amino compound is an aliphatic or aromatic diamine or triamine.

7. The process according to any of claims 1 to 6, wherein the amino compound is a C2-C20-alkylenediamine.

8. The process according to any of claims 1 to 7, wherein a mixture of different amino compounds is used as amino compound.

9. The process according to any of claims 1 to 8, wherein the protic acid is an acid of the formula Y^{m-} (H⁺)ₘ, where m is an integer.

10. The process according to claim 9, wherein m is an integer from 1 to 4.

11. The process according to any of claims 1 to 10, wherein the protic acid is an acid with a pKₐ greater than 1.

12. The process according to any of claims 1 to 11, wherein the protic acid is a carboxylic acid, sulfonic acid, phosphoric acid or phosphonic acid, where the acid groups of the sulfonic acid, phosphoric acid or phosphonic acid can be partially esterified.

13. The process according to any of claims 1 to 12, wherein the protic acid is acetic acid.

14. The process according to any of claims 1 to 13, wherein the process is carried out in water, in a water-miscible solvent or a mixture thereof.

## Revendications

1. Procédé de fabrication de composés polymères contenant des groupes imidazolium ioniques (en abrégé, composés d'imidazolium polymères ioniques), **caractérisé en ce que**
- un composé α-dicarbonyle,
- un aldéhyde de formule II
R3-CHO
dans laquelle R3 représente un atome H ou un radical organique de 1 à 20 atomes C,
- au moins un composé amino contenant au moins deux groupes amino primaires,
- éventuellement un composé amino contenant uniquement un groupe amino primaire et
- un hydracide,
les groupes carbonyle du composé α-dicarbonyle et de l'aldéhyde pouvant éventuellement également se présenter sous la forme d'un semi-acétal, d'un acétal ou d'un semi-cétal ou d'un cétal,
sont mis en réaction les uns avec les autres.

2. Procédé selon la revendication 1, **caractérisé en ce que** le composé α-dicarbonyle est un composé de formule I
R1-CO-CO-R2
dans laquelle R1 et R2 représentent indépendamment l'un de l'autre un atome H ou un radical organique de 1 à 20 atomes C.

3. Procédé selon la revendication 1 ou 2, **caractérisé en ce que** le composé α-dicarbonyle est le glyoxal.

4. Procédé selon la revendication 1, **caractérisé en ce que** l'aldéhyde est le formaldéhyde.

5. Procédé selon l'une quelconque des revendications 1 à 4, **caractérisé en ce que** le composé amino est un composé de formule III
(NH2-)ₙ R4
dans laquelle n est un nombre entier supérieur ou égal à 2, et R4 représente un radical organique n-valent quelconque.

6. Procédé selon l'une quelconque des revendications 1 à 5, **caractérisé en ce que** le composé amino est une diamine ou triamine aliphatique ou aromatique.

7. Procédé selon l'une quelconque des revendications 1 à 6, **caractérisé en ce que** le composé amino est une alkylène-diamine en C2 à C20.

8. Procédé selon l'une quelconque des revendications 1 à 7, **caractérisé en ce qu'**un mélange de différents composés amino est utilisé en tant que composé amino.

9. Procédé selon l'une quelconque des revendications 1 à 8, **caractérisé en ce que** l'hydracide est un acide de formule Y^{m-}(H⁺)ₘ, dans laquelle m représente un nombre entier.

10. Procédé selon la revendication 9, **caractérisé en ce que** m représente un nombre entier de 1 à 4.

11. Procédé selon l'une quelconque des revendications 1 à 10, **caractérisé en ce que** l'hydracide est un acide ayant une valeur de pKs supérieure à 1.

12. Procédé selon l'une quelconque des revendications 1 à 11, **caractérisé en ce que** l'hydracide est un acide carboxylique, un acide sulfonique, un acide phosphorique ou un acide phosphonique, les groupes acides de l'acide sulfonique, de l'acide phosphorique ou de l'acide phosphonique pouvant être partiellement estérifiés.

13. Procédé selon l'une quelconque des revendications 1 à 12, **caractérisé en ce que** l'hydracide est l'acide acétique.

14. Procédé selon l'une quelconque des revendications 1 à 13, **caractérisé en ce que** le procédé est réalisé dans de l'eau, dans un solvant miscible avec l'eau ou leurs mélanges.
